# EUROPEAN PATENT APPLICATION

(11) **EP 2 051 479 A1**
(43) Date of publication of application: **22.04.2009**
(21) Application number: 07118754.6
(22) Date of filing: 18.10.2007
(51) Int. Cl.: H04L 29/08

(54) **Control of push services**

(71) Applicant: Nokia Siemens Networks Oy, 02610 Espoo (FI)
(72) Inventor: Haataja, Timo, 02700, Kauniainen (FI); Kasanen, Pertti, 00150, Helsinki (FI)
(74) Representative: Äkräs, Tapio Juhani

(57) **Abstract**

A method for operating push services. At least two separate activation states that correspond to a predefined functionality set presently applicable to the user of a switched-on user terminal are defined. Messages of at least one push service are transmitted from a server to a user terminal. The current activation state of the user terminal is detected, and an indication on it is provided to the server. The server adjusts sending of messages of the push service according to the current activation state of the user terminal.

## Description

### FIELD OF THE INVENTION

The present invention relates to telecommunications, and particularly to a method, a user terminal, a server, a communications system, and a computer program product as disclosed in the preambles of the independent claims.

### BACKGROUND OF THE INVENTION

A service refers to an intangible product that consists of activities between a service provider and a customer to meet the customer needs. Communications service may be used to provide information to parties using a communications network. In communications, pull technology refer to a mechanism by means of which a user performs a search using a browser and obtains the results of the search to his user terminal. This is contrasted to push services where a request for a given transaction originates with the publisher, typically a push server accessible to subscribers.

The basic idea in using push services is that desired up-to-date information becomes available to the user with minimum effort, without separate operations for controlling the communication between the server that provides the service and the user terminal. The best effect is achieved with applications that can be kept running continuously in the background at all times the user terminal is switched on. However, when the amount of active push services or transmissions for the push services is getting high, some problems are expected.

In mobile devices, battery lifetime is a critical operational factor of the device. It is known that during transmissions and receptions, a considerable amount of power is consumed. Numerous separate transmissions are, however, a common factor for a number of widely spread push services. For example, in presence services, a presence server collects presence information from a plurality of user devices and pushes presence information of a selected group of users to a user terminal. The transmissions of presence information are typically implemented as a background process in the user terminal. In case the group of watched users is big, the amount of transmissions easily gets high. In case the watcher uses a mobile phone, the use of presence service may be quite disruptive to the battery life of the mobile phone.

Additionally, charging arrangements around push services tend to be complicated and any uncontrollable factor in the amounts of transmitted data is not easily accepted either by users or operators. In flat fee charging, the operator may end up delivering considerable amounts of data without appropriate compensation. If the charge accumulates according to transferred data, the user may end up paying for a great number of background transmissions that he cannot fully utilize.

### SUMMARY OF THE INVENTION

An object of the present invention is thus to provide a method and an apparatus for implementing the method so as to overcome the above problems. The objects of the invention are achieved by a method, a user terminal, a server, a communications system, and a computer program product, which are characterized by what is stated in the independent claims. The preferred embodiments of the invention are disclosed in the dependent claims.

The invention is based on the idea of pausing the transmissions from the server at the times the user terminal is switched on but not actually in use. These times are automatically detected on the basis of the operational status of the user terminal and information that allows also the server to be aware of them is provided to the server. The operation of the server may then be adjusted according to this information such that all or part of the background transmissions are eliminated. The amount of transmissions may thus be reduced and redundant transmissions eliminated. Further advantages of the invention are discussed in the detailed description of the embodiments.

### BRIEF DESCRIPTION OF THE DRAWINGS

In the following the invention will be described in greater detail by means of preferred embodiments with reference to the attached [accompanying] drawings, in which
Figure 1 illustrates an embodiment where messages of a push service are compiled in a server and delivered to a user terminal over the air interface;
Figure 2 illustrates a mobile communications system;
Figure 3 illustrates an exemplary hardware configuration for the implementation of a device applicable as the user terminal or the push server of Figure 1;
Figure 4 illustrates steps of the embodied method from the point of view of the state manager in the user terminal;
Figure 5 illustrates the steps of the embodied method from the point of view of the push server;
Figure 6 illustrates implementation of the embodied method from the point of view of the communications system; and
Figure 7 illustrates an exemplary arrangement for adjusting the length for the period of transmissions.

### DESCRIPTION OF EMBODIMENTS

It is appreciated that the following embodiments are exemplary. Furthermore, although the specification may in various places refer to "an", "one", or "some" embodiment(s), reference is not necessarily made to the same embodiment(s), or the feature in question does not only apply to a single embodiment. Single features of different embodiments may be combined to provide further embodiments.

The invention is applicable to any communications system capable of providing push services. Push service is a telecommunication service by means of which a terminal user is sent information without a separate request for a single transmission. Push transactions are often based on information preferences expressed in advance through subscription. Examples of push services comprise a variety of implementations, like presence service, instant messaging, peer-to-peer applications, push email, and the like. Applicable communications systems include mobile communications systems, fixed telecommunications systems, and a variety of differently clustered combinations of them. In the following, the present invention will be described in the context of providing push services to a user terminal of a mobile communications system.

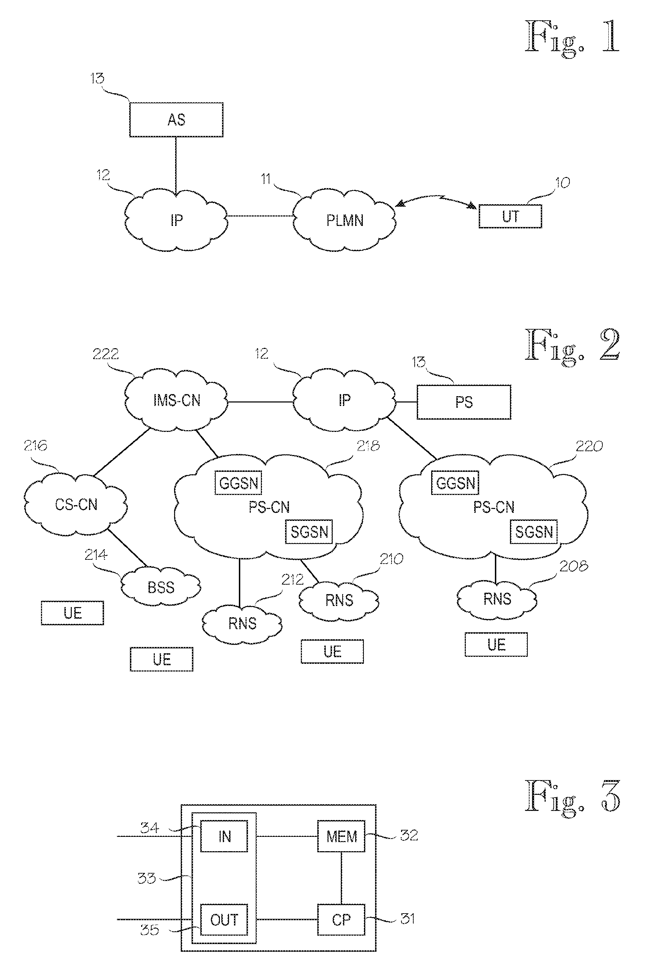

Figure 1 illustrates an embodiment of the invention in the mobile communications system where messages of a push service are compiled in a server and delivered to a user terminal over the air interface. It should be noted that specifications of communications systems and particularly wireless communications systems develop rapidly. Therefore, all terms and expressions in the following descriptions should be interpreted broadly, since they are intended to illustrate, not to restrict the interpretation of the invention.

Figure 1 is simplified system architecture and shows only some elements in the architecture of an exemplary system. The network nodes shown in Figure 1 represent logical units whose implementation may differ from what is shown. The logical units may be combined to each other, i.e. a functionality of one logical unit described below may be enhanced to comprise a functionality of another logical unit described below and/or a functionality of a prior art network node (logical unit). Additionally, the connections shown in Figure 1 between network nodes are logical connections; the actual physical connections may be different than the logical connections. It is apparent to a person skilled in the art that the systems also comprise a plurality of other functions and structures that for conciseness will not be described in detail herein.

Figure 1 illustrates a mobile device 10 applicable as a user terminal (UT) of a subscriber in a public land mobile network (PLMN) 11. The user terminal of a communication system can be a simplified terminal for speech only or a terminal for diverse services. In the latter case the user terminal acts as a service platform and supports loading and execution of various functions related to the services. User terminal typically comprises mobile equipment and a subscriber identity module, typically a detachably connected identification card. In this context, the user terminal thus refers to the entity formed by the subscriber identity module and the actual mobile equipment. The subscriber identity module is typically a smart card that holds the subscriber identity, performs authentication algorithms, and stores authentication and encryption keys and other subscription information that is needed at the user terminal. The mobile equipment may be any device capable of communicating in a mobile communication system or it may be a combination of several devices, for instance a multimedia computer to which a phone card has been connected to provide a mobile connection.

A mobile network refers generally to any telecommunications network that subscribers may access, and wherein the access point to the system may change when users are moving within the service area of the network. The mobile communications system described in Figure 1 is a Public Land Mobile Network (PLMN). The mobile communications network is an access network providing a user with wireless access to external networks, hosts, or services offered by service providers. The configuration of PLMN will be discussed in more detail with Figure 2.

As an example of external networks, Figure 1 illustrates an IP packet data network 12. An IP packet data network may comprise one or more networks that enable exchange of information using the Internet protocol. The IP packet data network 12 of Figure 1 can thus represent a single local area network, a comprehensive multimode network that connects large numbers of terminals and computers over a wide area, or any combination of such.

Figure 1 shows also a push server 13 that may communicate with the user terminal 10 through the IP packet data network 12 and PLMN 11. The push server is a device that compiles and transmits messages of one or more push services to the user terminal 10. The push server may compile the messages of the push service, for example, on the basis of information received through the IP packet data network, or on the basis of information retrieved from one or more databases accessible to it, or as a combination of both.

As illustrated in Fig 2, in mobile communications systems a public land mobile network (PLMN) infrastructure may be logically divided into a core network (CN) 216, 218, 220, 222 and access network (AN) infrastructures 208, 210, 212, 214. A radio access network AN may thus refer, for example, to a base station subsystem (BSS) 214 for the GSM and radio network subsystem (RNS), or radio access network (RAN) 208, 210, 212 for the UMTS.

The core network CN may be logically divided into a circuit-switched (CS) domain 216, a packet-switched (PS) domain 218, 220 and an IP multimedia subsystem (IMS) 222.

The CS domain refers to a set of all CN entities offering CS type of connection for user traffic as well as all the entities supporting the related signalling. A CS type of connection is a connection for which dedicated network resources are allocated when a connection is established and released when the connection is released.

A PS type of connection transfers the user information using packets so that each packet can be routed independently from the previous one. An example of the PS domain may be the GPRS (General Packet Radio Service), and the typical entities may include a serving GPRS support node (SGSN) and a gateway GPRS support node (GGSN). The IP multimedia subsystem comprises CN elements for provision of multimedia services. The IP multimedia subsystem IMS utilizes the PS domain to transport multimedia signalling and bearer traffic. Consequently, UE accessing the PS core network, and the PS core network itself, utilizes the services provided by the radio access network to provide packet-mode communication between the user terminal and the PS CN subsystem. The multiple access method employed in the air interface in the RAN may be Time Division Multiple Access (TDMA), Frequency Division Multiple Access (FDMA), Code Division Multiple Access (CDMA), or any other method or a combination thereof.

The push server 13 may connected to the IP packet data network 12 and utilize services of the communication system to exchange information with different communication parties, for example to the user terminal of the PLMN. In case the push server and the user terminal operate within the same PS domain, the external IP packet data network is not necessarily needed.

Figure 3 illustrates an exemplary hardware configuration for the implementation of a device applicable as the user terminal 10 or the push server 13 of Figure 1. The element comprises a processing unit 31, an element that comprises an arithmetic logic module; a number of special registers and control circuits. Connected to the processing unit is a memory unit 32, a data medium where computer-readable data or programs or user data can be stored. The memory means typically comprise memory modules that allow both reading and writing (RAM), and memory modules whose contents can only be read (ROM). The unit also comprises an interface block 33 with input unit 34 for inputting data for internal processing in the element, and output unit 35 for outputting data from the internal processes of the element.

Examples of said input unit 34 in a push server 13 comprise plug-in units acting as a gateway for information delivered to its external connection points. For receiving information from the operator of the network element, the input unit 34 of the push server may also comprise a keypad, or a touch screen, a microphone, or the like. Examples of said output unit 35 in the push server include plug-in unit feeding information to the lines connected to its external connection points. For outputting information to the operator of the network element, the output unit 35 may also comprise a screen, a touch screen, a loudspeaker, or the like.

The interface block 33 of the user terminal 10 typically comprises at least a user interface unit for communicating with the user and a radio interface unit for communication over the cellular mobile network. In addition, the user terminal may comprise additional interface units, for communication over another type of cellular network, or in another frequency, or for local communication. Examples of the technologies used for the local communication comprise Wireless Local Area Network (WLAN), Wi-Fi, Wi-Max Bluetooth, Infrared, use of cables, etc. Depending on the application, the implementation of said interface units may comprise a plug-in unit exchanging information through lines connected to external connection points of the user terminal, or light/radio transceiver units with appropriate protocol stacks in the user terminal.

The processing unit 31, memory unit 32, and interface block 33 are electrically interconnected for performing systematic execution of operations on the received and/or stored data according to the predefined, essentially programmed processes of the element. In solutions according to the invention, the operations comprise functions for implementing the logical units, operations and interfaces of the elements 10 and 13 as will be described in the following.

In the user terminal end, the above-described units are configured to form a functional entity that is hereinafter referred to as a state manager. The state manager of the user terminal monitors the activation state of the user terminal and indicates this state to the push server such that the push server is able to adjust its operation according to the state of the user terminal. The activation state of the user terminal relates to a predefined operational state when the user terminal is switched on, and each of the operational state corresponds to a predefined group of user terminal operations. Only this predefined group of user terminal operations is applicable as long as the user terminal is in the corresponding operational state.

The activation state of the user terminal is determined on the basis of a predefined activation state indicator. The activation state indicator is a predefined feature or operational function of the user terminal that allows automatic detection and is selected to indicate whether the user is actually using or in a position to use the one or more push services associated with the indicator. The indicator may be a user terminal -specific parameter or a generic feature used and interpreted in the same way in a plurality of user terminals operating in the mobile communications network. The indicator may be statically configured to the user terminal or it may be provided as a user terminal feature that the user of the terminal may dynamically adjust via the user interface.

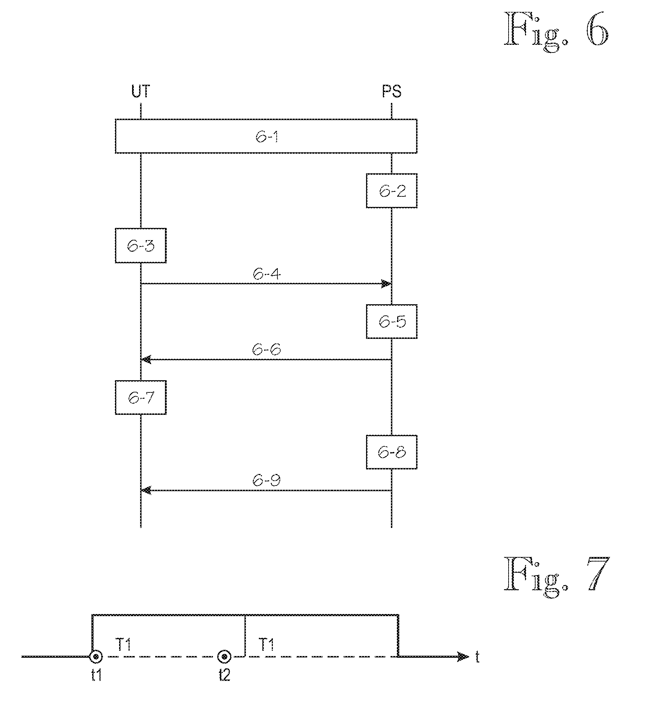

In the present embodiment, a permanent activation state indicator aims to provide an automatic indication on whether the user terminal is in such operational state that the user can or cannot exploit the results of the push service. The entry to the defined operational state of the user terminal may be a result of a user operation or an automatic operation, but the detection of the state and the associated indication are performed automatically. There are several possible ways to detect the operational state and determine the associated activation state in the user terminal. In the present embodiment the indicator IND is defined such that the user terminal is deemed inactive any time it is in a power save mode. This option is discussed in more detail in Figure 6. It is clear that other methods for determining the operational state may be used without deviating from the scope of protection.

Such alternative methods comprise, for example, deeming the user inactive when the background lights for the keys and display in the user terminal are off, when the key lock is on, or when a specific silent profile is selected. Also time-based indication is possible such that the user terminal automatically deems that during some period of the day, for example during the night, the user terminal is deemed inactive.

In location-based indication, the user terminal may be configured to determine positions or area it presently resides in, and on the basis of that whether the user either can or cannot exploit the results of the push service. The position indication may be based, for example, on Global Positioning System (GPS) coordinates, identity of the cell in a cellular network, identity of the network or serving network node (e.g. WLAN), etc. For example in case of GPS coordinates, the user terminal may be configured with a list of coordinates that associate with places (bedroom, church, meeting rooms of office building, etc.) where use of the defined push service is not allowed, or is objected to. If the position indication matches with one of these coordinates in the list, the terminal is deemed inactive.

Terminal-based indication associates to situations where the user has several user terminals, for example, a fixed user terminal as a primary terminal and a mobile user terminal as a secondary terminal. These terminals may be configured with a detector (for example, a Bluetooth application) such that when they are in a defined range from each other, they detect each other's proximity. It is assumed, that the user utilizes the push service primarily in his fixed user terminal whenever he is near it. Thus, when the user is by his fixed terminal, and the two terminals are within a defined range, the mobile user terminal may be deemed inactive. When the two terminals are not within the defined range, the mobile user terminal is to be deemed active.

The user terminal according to the invention may be configured with two or more activation states. In the present embodiment the user terminal has two activation states AS1 and AS2, such that the first activation state AS1 corresponds to active state where the user is able to exploit the results of the push service and the second state AS2 corresponds to inactive state where the user is assumed not to exploit the results of the push service. In order to eliminate unnecessary traffic related to the push service when the results appear unnecessary, the state manager monitors the indication and informs the push server on any relevant changes in the activation state of the user terminal.

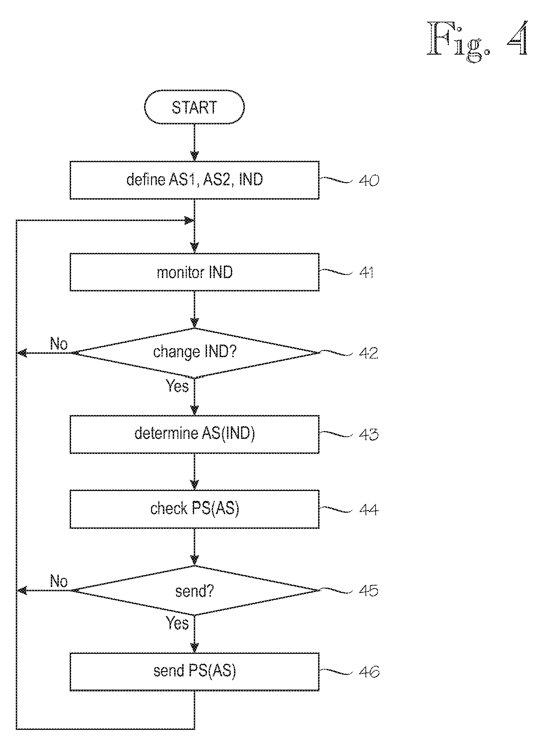

Figure 4 illustrates steps of the embodied method from the point of view of the state manager in the user terminal. The procedure begins at the stage where the embodied method is taken into use in the user terminal. In step 40 the first and second activation states AS1, AS2, and the indicator IND are defined for use in the user terminal. In the following, the exemplary definitions given above are applied to the embodiment of Figure 1. During operation of the user terminal the state manager monitors (step 41) the status of the indicator IND. If the status of the indicator is not changed (step 42), the state manager returns to step 41 to continue monitoring of the indicator. If a change in the status is detected (step 42), the state manager determines (step 43) the activation state AS(IND) that corresponds with the current status of the indicator IND. The state manager may be configured to check (step 44) in the user terminal whether the information on the determined activation state actually needs to be sent to the push server. For example, the user terminal may have three different activation states, but operate such that only indication on the state that corresponds to full inactivity of the user terminal is sent to the push server. If sending of the information is not necessary (step 45), the procedure returns to step 41 of monitoring the indication IND. Otherwise, the information on the current activation status is sent (step 46) to the push server. The information may be delivered in a separate signaling message, or included in a standard signaling message exchanged between the user terminal and the push server.

It is clear that the procedure of Figure 4 is an example only and several alternative implementations are possible within the scope of protection. For example, in a simplified implementation of the state manager, either or both of the steps 42 may be omitted such that the state manager only monitors the indicator and forwards the status of the indicator to the push server. The push server then decides whether the status has changed and/or whether the change is relevant for adjusting the transmissions associated with the push services.

In the push server end, the above-described units are configured to form a functional entity that is hereinafter referred to as a push message manager. A server application is referred to in RFC 2616 as application program that accepts connections of clients in order to service requests by sending back responses. Server computers are devices designed to run such an application or applications. The push server may refer to a server computer that provides one or more server applications, including one or more push type server applications, to a plurality of clients, including the mobile user terminal of Figure 4. The push server may also refer to a proxy server that proxies communications between the user terminal and one or more server computers. The push message manager thus represents a functional entity implemented in any of the above configurations.

The push message manager monitors the activation status of the user terminal and adjusts sending of the messages of one or more push services targeted to the user terminal according to the current activation status of the user terminal. In order to avoid missing any valuable information during inactivity periods of the user terminal, the push message manager may aggregate all or part of the messages detained in the push server during the inactivity period, and forward them to the user terminal when the user terminal becomes active again.

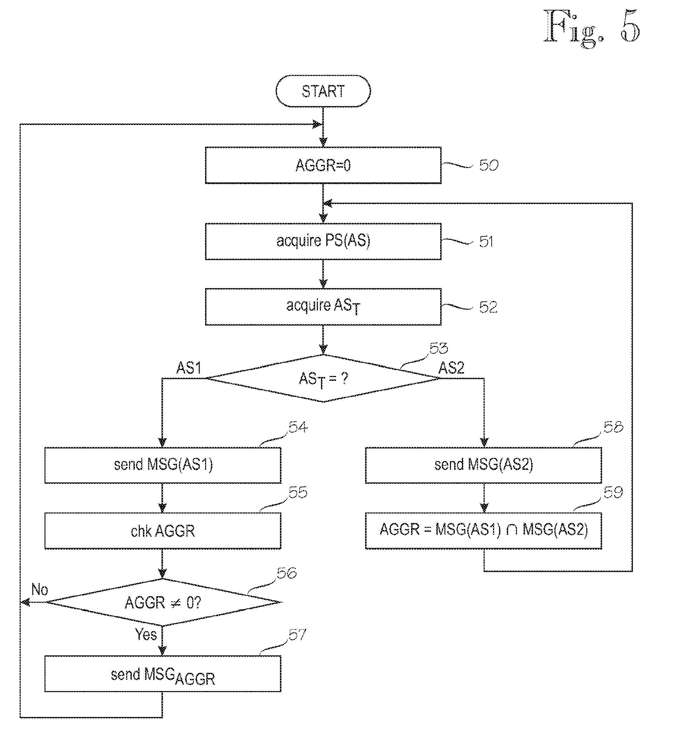

Figure 5 illustrates the steps of the embodied method from the point of view of the push server. The procedure begins when at the stage where the embodied method is taken into use in the push server. In step 50 aggregation storage AGGR for detained messages of a user terminal is reset, and the push message manager (PMM) acquires (step 51) information on the current activation state of the user terminal. In the present embodiment, PMM achieves this by monitoring during the operation for defined messages from the user terminal that may include information PS(AS) on the activation state of the user terminal. The information may comprise a direct indication on the activation state or information on the basis of which PMM may determine the activation state. When the information PS(AS) is available to PMM, it determines (step 52) the current activation state of the user terminal AS_{T} . On the basis of the determined activation state, PMM adjusts the transmission of the push messages. In the present embodiment, in case of active state AS1, PMM forwards (step 54) all messages MSG(AS1) presently due for transmission to the user terminal. PMM also checks (step 55) whether the aggregation storage AGGR comprises any detained messages. In the negative case (step 56), the procedure continues from step 50, otherwise PMM retrieves from AGGR all or a selected part of the detained messages MSG_{AGGR} and sends (step 57) them to the user terminal before returning to step 50. In case of inactive state AS2, PMM sends (step 58) to user terminal only a selected part MSG(AS2) of the messages of the push service and detains the remaining messages MSG(AS1)∩IMSG(AS2) in the push server. The selected part may be empty, i.e. none of the messages of the push service are sent, or comprise some messages, for example, control messages communicated between the user terminal and the push server. The detained messages MSG(AS1)∩MSG(AS2) are stored (step 59) in the aggregation storage.

It is clear that the procedure of Figure 5 is an example only and several alternative implementations are possible within the scope of protection. For example, the detained messages may be filtered, for example before aggregation or before transmission such that only messages that are not expired are sent to the user terminal. The user terminal may have more than two activation states each of which correspond to different detaining, aggregation, and post-transmission schemes. PMM may also be responsible of managing more than one push service that may or may not have a different detaining, aggregation, and post-transmission schemes for activation states of the user terminal. On the basis of the above description, such variations are clear to a person skilled in the art and will not be discussed further herein.

The signaling chart of Figure 6 illustrates implementation of the embodied method from the point of view of the communications system. As an example of a push service, presence information is discussed in more detail. Presence information may be used as status indicator to describe user's communication status and willingness to communicate. Presence information may also be used as communication media describing user's context and mood. Other users can see the presence of the originator and the presence can be changed either automatically or by the originator.

User terminal's client provides presence information (presence state) via a network connection to a presence service, which is stored in what constitutes his personal availability record (called a presentity) and can be made available for distribution to other users (called watchers) to convey his availability for communication. Presence is largely used in Internet and popular Internet communication services like MSN Messenger, Yahoo Messenger and Skype. Mobile Presence has also been area of interest already many years and has been implemented with multiple technologies. First implementations were using SMS as bearer, later on instant messaging and presence service (IMPS) was introduced. In IMPS, possible bearers were SMS and WAP. IETF and 3GPP has been working on SIP Simple, and presence information has been a topic of those discussions, as well. In addition, IETF has formalized also Extensible Messaging and Presence Protocol (XMPP), an open XML communications technology for Instant Messaging and Presence. In addition to these, many Internet Service Providers use their own proprietary protocol. Delivery of presence information has been implemented using both User datagram Protocol (UDP) and Transmission Control Protocol (TCP) based IP protocols.

Presence information is updated continuously in the background in the watcher's user terminal when a presence application is on and active in mobile device. In symmetric presence sharing case between N parties, there is typically N times more downstream traffic than upstream traffic. This has been noted to cause some clear problems.

Firstly, the traffic related to delivery of the watcher's presence information is problematic both for the operator and the subscribers. Changes in presence information originate from multiple sources and changes are relatively evenly distributed over the day. The type of traffic with several transmissions but relatively little data transmitted at a time uses lots of resources in all types of radio networks. Additionally, subscribers may need to pay their presence traffic in their monthly data fee. This means that end-users are most likely not that interested in keeping a possibly high-traffic presence application active, because they do not have direct control to the rate of traffic and at least may not want to pay for something that happens in background. On the other hand, if a monthly flat fee covers presence traffic, operators may not be that willing to promote use of presence applications, because they may end up delivering significant amounts of presence traffic without any compensation.

Another problem with use of presence information in mobile environments is device battery consumption. Frequent transmissions and receptions of presence information may significantly shorten the battery life of the mobile device.

Internet Draft "An Extension to Session Initiation Protocol (SIP) Events for Pausing and Resuming Notifications" by M. Vakil defines an extension to SIP events that allows the subscriber to pause, un-pause notifications, and be able to perform fetch (poll) subscriptions within an established (created) subscription dialog. This solution is, however, applicable only in SIP environment. Additionally, in order to pause the subscription on a temporary basis, subscriber needs to issue a SIP SUBSCRIBE request, similar to a refresh subscription, with an event header parameter of "notify=off". The subscription remains inactive until it expires or subscriber sends a request to resume notifications. This means that the procedure is based on separate activation of the client. However, users cannot be expected to continuously consider whether they wish to receive presence information. On the other hand, user's behavior is typically inconsistent such that a client application cannot operate on the basis of a predefined pausing and resuming algorithm.

An embodiment of the present invention solves this problem by providing a dynamic procedure based on actual use of the mobile device. Referring to Figure 6, in step 6-1 a presence service subscription is made between the user terminal (watcher) and the presence server. A conventional presence service subscription procedure, for example in according to the subscriber procedures described in The Internet Engineering Task Force (IETF) request for comments RFC3265 and RFC3856 may be utilized. Between the presence server and the user terminal there is furthermore established, either permanently or through associated signaling during the subscription, an activation state indication on the basis of which the presence server may receive information on the activation level of the user terminal, and thus decide whether to send presence information to this particular watcher or not. The current activation state of the user terminal is determined on the basis of an indicator, which is advantageously automatic and directly relates to the user interface operations such that the user does not need to perform any separate actions for controlling the transmissions of the presence service. In this embodiment, the entry of the user terminal to power-save mode acts as an indicator of entering inactive state, during which transmissions of the presence information is dispensable. On the other hand, exit from the power-save mode acts as an indicator of entering active state during which presence information is required on a continuous basis.

Use of power-save mode as an activation state indicator is advantageous because it is directly associated with the user's behavior and is available for power-save features in some form practically in any mobile terminal models. Entry into and exit from power-save mode is typically a generic feature in mobile user terminals. For example, when content is delivered between a mobile station and the mobile communications network, radio resources are reserved and power consumption in the mobile station is high. After a defined period of inactivity, timers expire and resources are released, but the display screen is active and key lights are on. After another, typically configurable period, lights in the display and keys are dimmed or switched off. Finally, the mobile station switches automatically to power save mode. In a typical commercial mobile station the above modes, periods and power consumptions may be as follows:

| Mode | Period | Power consumption |
|---|---|---|
| Content delivery | 20 sec | 1,4 W |
| Lights on | 30 sec | 0,4 W |
| Lights off | 60 sec | 0,2 W |
| Power save | | 0,05 W |

In power-save mode typically at least the lights in the display are dimmed, and key lights are dimmed or turned off. Additionally the transmission and reception functions of the mobile station are typically limited and/or operated according to a defined sleep mode scheme. Other features may be possible as well, for example depending on the user settings a screen saver may be active in the display. Entry towards inactive mode is typically associated with an inactivity timer of the user interface, for example such that in case no input commands through any of the input elements of the user interface are detected within a defined time, the user terminal will enter the next mode towards inactivity. Entry towards active mode is typically associated with user activity. For example, when some user interface activity is detected, the user terminal enters first the 'Lights on' mode and then the 'Content delivery' mode. These modes may be mapped to the activation state indication for provision to the push server.

In this embodiment the activation state information discussed above is configured such that active state corresponds to the user terminal being in 'Lights on' or 'Content delivery' mode, and the activation state indication is transmitted only when the user terminal enters into active state by moving to the 'Lights on' mode. When the user terminal has not informed the presence server of being in the active state, the presence server considers it inactive and detains presence information until the next activity period. The arrangement requires less communication, and is thus quick and simple and causes considerably less load to the radio interface.

This means that after stage 6-1, the user terminal is in inactive mode and the presence server does not send watcher's presence information to the user terminal. Instead the presence server aggregates (6-2) the detained presence information to a memory or database accessible to it. When the user terminal detects (step 6-3) exit from the power-save mode and thus entry into activity state, it generates the defined activation state indication and sends (step 6-4) it to the presence server. Depending on the applied communication system, several different methods for providing the activation state information to the presence server may be employed. For example, presence subscription events (SIP, XMPP) that are triggered by exit from power-save mode may be used. Implementation of similar inter-relationship to proprietary protocols is obvious to a person skilled in the art.

When a presence server receives the activation state information, it compiles (step 6-5) the aggregated presence information to one or more update messages and transmits (step 6-6) these one or more messages immediately to the user terminal. Application of up-to date presence information (step 6-7) is possible in the user interface right after step 6-6. The presence server also begins to forward all incoming presence information (step 6-8) directly to the user terminal and continue the transmissions (step 6-9) for a defined period. The length of the period may be a predefined permanent interval configured to the presence server and the user terminal, or it may be a dynamically variable parameter. Advantageously, the length of the period equals the inactivity period of the user terminal.

In its simplest form the compilation step comprises retrieval of the stored presence information from the database and forwarding this information to the user terminal. The compilation step may alternatively be enhanced by filtering out presence information that is redundant for the user terminal. For example, presence information that has remained unchanged during the user terminal's inactivity period may be filtered out such that only presence information that needs to be updated is transmitted to the user terminal.

Figure 7 illustrates an exemplary arrangement for adjusting the length for the period of transmissions. At time t₁ the user terminal sends an activation sate indication and thus triggers the presence server's operation as described in Figure 6. The period defined for presence information transmissions is T1. During the transmission period, PMM continues monitoring the activation state of the user terminal. In this example, the term equals the inactivity period of the user terminal, and no separate monitoring arrangement is necessary. Shortly before the expiry of the period T1, at time t₂ PMM checks the inactivity timer of the user terminal. If the timer has expired, or close to expiry, it will not do any further actions and the transmissions from the presence server will be discontinued again at time t₁+T1. On the other hand, if the timer has not expired, or not even close to expiry, PMM sends a new indication and thus continues the transmissions for another T1 period.

It will be obvious to a person skilled in the art that, as the technology advances, the inventive concept can be implemented in various ways. The invention and its embodiments are not limited to the examples described above but may vary within the scope of the claims.

## Claims

1. A method, **characterized by** comprising:
defining for a user terminal at least two separate activation states, each of the activation states corresponding to a predefined functionality set of a switched-on user terminal, wherein the functionality set is presently applicable to the user;
transmitting messages of at least one push service from a server to a user terminal, the server sending the messages of the push service without a separate request for a single transmission by the user terminal;
detecting a current activation state of the user terminal;
providing an indication on the current activation state of the user terminal to the server;
adjusting the sending of messages in the server according to the current activation state of the user terminal.

2. The method according to claim 1, **characterized by**:
defining for the user terminal an activation state indicator for indicating the current activation state of the user terminal;
detecting the current activation state of the user terminal according to the activation state indicator.

3. The method according to claim 2, **characterized in that** the activation state indicator is an automatically detectable operational function of the user terminal.

4. The method according to claim 2, **characterized in that** the activation state indication is based on one of the following user terminal operational functions: screen saver activation, key lock activation, predefined key sequence, inactivity timer triggering, predefined positioning signal detection, and primary terminal detection.

5. The method according to claim 1, **characterized by**:
defining for the user terminal a first activation state and a second activation state;
adjusting the sending of messages in the server such that during the first activation state any messages of any push service are directly forwarded to the user terminal and during the second activation state at least part or all of the messages of the push service are not forwarded to the user terminal.

6. The method according to claim 5, **characterized by**:
aggregating during the second activation state the messages that are not forwarded to the user terminal to the server;
sending the aggregated messages to the user terminal in response to the user terminal sending an indication on changing to the first activation state.

7. The method according to claim 6, **characterized by**:
providing with the indication on changing to the first activation state an indication on a requested period for remaining in the first activation state;
adjusting the sending of messages in the server according to the first activation state of the user terminal for the requested period;
adjusting the sending of messages in the server according to the second activation state of the user terminal after the requested period.

8. A user terminal, comprising means for receiving messages of at least one push service from a server, the messages of the push service being transmitted without a separate request for a single transmission by the user terminal; **characterized by** having at least two separate activation states, each of the activation states corresponding to a predefined functionality set of a switched-on user terminal, wherein the functionality set is presently applicable to the user; and by the user terminal comprising:
means for detecting a current activation state of the user terminal;
means for providing an indication on the current activation state to the server.

9. The user terminal according to claim 8, **characterized by** an activation state indicator for indicating the current activation state of the user terminal; and comprising
means for detecting the current activation state of the user terminal according to the activation state indicator.

10. The user terminal according to claim 9, **characterized in that** the activation state indicator is an automatically detectable operational function of the user terminal.

11. A user terminal according to claim 10, **characterized in that** the activation state indication is based on one of the following functions: screen saver activation, key lock activation, predefined key sequence, inactivity timer triggering, predefined positioning signal detection and primary terminal detection.

12. A user terminal according to claim 8, **characterized by** having a first activation state and a second activation state; and comprising
means for sending to the server an indication on changing to the first activation state.

13. A user terminal according to claim 12, **characterized by** means for providing with the indication on changing to the first activation state an indication on a requested period for remaining in the first activation state.

14. A server, comprising means for transmitting messages of at least one push service to a user terminal, the server sending the messages of the push service without a separate request for a single transmission by the user terminal, **characterized by**
means for acquiring an indication on a current activation state of the user terminal, the user terminal having at least two separate activation states, each of the activation states corresponding to a predefined functionality set of a switched-on user terminal, wherein the functionality set is presently applicable to the user; and
means for adjusting the sending of messages in the server according to the current activation state of the user terminal.

15. The server according to claim 14, **characterized by**:
means for defining for the user terminal a first activation state and a second activation state;
means for adjusting the sending of messages such that during the first activation state any messages of any push service are directly forwarded to the user terminal and during the second activation state at least part or all of the messages of the push service are not forwarded to the user terminal.

16. The server according to claim 15, **characterized by**:
means for aggregating during the second activation state the messages that are not forwarded to the user terminal to the server;
means for sending the aggregated messages to the user terminal in response to the user terminal sending an indication on changing to the first activation state.

17. The server according to claim 16, **characterized by**:
means for acquiring with the indication on changing to the first activation state an indication on a requested period for remaining in the first activation state;
means for adjusting the sending of messages according to the first activation state of the user terminal for the requested period;
means for adjusting the sending of messages in the server according to the second activation state of the user terminal after the requested period.

18. A communication system comprising a user terminal according to any of claims 8 to 13 and a server according to any of claims 14 to 17.

19. A computer program product readable by a computer and encoding a computer program of instructions for executing a computer process for communication, the process including:
defining at least two separate activation states, each of the activation states corresponding to a predefined functionality set of a switched-on user terminal, wherein the functionality set is presently applicable to the user;
receiving messages of at least one push service from a server, the messages of the push service being transmitted without a separate request for a single transmission;
detecting a current activation state of the user terminal;
generating an indication on the current activation state;
sending the indication to said server.

20. A computer program product readable by a computer and encoding a computer program of instructions for executing a computer process for communication, the process including:
transmitting messages of at least one push service to a user terminal, the messages of the push service being transmitted without a separate request for a single transmission by the user terminal;
acquiring an indication on a current activation state of the user terminal, the user terminal having at least two separate activation states, each of the activation states corresponding to a predefined functionality set of a switched-on user terminal, wherein the functionality set is presently applicable to the user;
adjusting the sending of messages in the server according to said current activation state of the user terminal.
